(19) **Europäisches Patentamt**
**European Patent Office**
**Office européen des brevets**

(11) **EP 4 201 977 A1**

(12) **EUROPEAN PATENT APPLICATION**
published in accordance with Art. 153(4) EPC

(43) Date of publication:
**28.06.2023 Bulletin 2023/26**

(21) Application number: **21857414.3**

(22) Date of filing: **13.07.2021**

(51) International Patent Classification (IPC):
*C08G 63/91* (2006.01)     *C08J 7/12* (2006.01)
*C08J 7/00* (2006.01)     *C08L 67/04* (2006.01)

(52) Cooperative Patent Classification (CPC):
**C08G 63/06; C08G 63/91; C08J 7/00; C08J 7/12;**
**C08L 67/04**

(86) International application number:
**PCT/CN2021/105985**

(87) International publication number:
**WO 2022/037319 (24.02.2022 Gazette 2022/08)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **19.08.2020 CN 202010837348**

(71) Applicants:
• **China Energy Investment Corporation Limited**
**Beijing 100011 (CN)**
• **National Institute of Clean-and-Low-Carbon**
**Energy**
**Beijing 102209 (CN)**

(72) Inventors:
• **SUN, Xiaojie**
**Beijing 102209 (CN)**
• **CHEN, Lanlan**
**Beijing 102209 (CN)**
• **WANG, Rong**
**Beijing 102209 (CN)**
• **LIANG, Wenbin**
**Beijing 102209 (CN)**

(74) Representative: **Kador & Partner Part mbB**
**Corneliusstraße 15**
**80469 München (DE)**

(54) **MODIFIED POLYGLYCOLIC ACID, PREPARATION METHOD THEREFOR AND USE THEREOF**

(57)     Provided are a modified polyglycolic acid, a preparation method therefor and use thereof. The modified polyglycolic acid comprises a structural unit A derived from polyglycolic acid and a structural unit B derived from polyisocyanate compound; and a molar ratio of the structural unit A to the structural unit B is greater than 400 : 1. The modified polyglycolic acid has characteristics of a high weight-average molecular weight, a high melt viscosity and a low melt flow rate, and meanwhile, it also has high tensile strength, and improved heat stability.

**Wave number/cm⁻¹**

FIG. 1

EP 4 201 977 A1

**Description**

CROSS-REFERENCE TO RELATED APPLICATION

The present application claims priority of Chinese Patent Application 202010837348.1 filed on August 19, 2020, and the contents of which are incorporated herein by reference.

TECHNICAL FIELD

The present invention relates to the field of polymer materials, and particularly to a modified polyglycolic acid, a preparation method therefor and use thereof.

BACKGROUND

As human beings pay more and more attention to the ecological environment, biodegradable polymer materials that are friendly to the environment are receiving more and more attention. China's biodegradable material industry is developing rapidly, with constantly broken through key technologies, increased product types and enhanced product economy, and biodegradable materials have shown a strong development momentum.
Polyglycolic acid (PGA) is a biodegradable polymer, and may be applied to various fields, such as films, fibers, packaging containers, multilayer bottles and medical sutures, due to its good biodegradability, good mechanical strength and excellent gas barrier performance. Although PGA with a certain relative molecular weight can be obtained through ring-opening polymerization, the PGA still has low melt strength, a very low melt viscosity, and a high melt flow rate, which limit an applicability of the PGA in blow molding, extrusion and other molding processes, thus greatly hindering a wide application of the PGA in various fields. A molecular weight of polyester can be increased, and physical and chemical performances of the polyester can be improved through solid-state polycondensation, melt polycondensation, reactive extrusion and other methods.
CN106432697A discloses a preparation method for a degradable polyglycolic acid, which comprises: obtaining a polyglycolic acid prepolymer through a polycondensation reaction first, and then adding a chain extender MDI into a polymerization container to obtain polyglycolic acid with a high molecular weight. Since the polyglycolic acid in this patent application is obtained by chain extension of oligomers, mechanical performances of thus prepared polyglycolic acid cannot meet actual demands.

SUMMARY

The present invention aims to overcome problems of a low melt strength, a low melt viscosity and a high melt flow rate of polyglycolic acid in the prior art, and provide a modified polyglycolic acid, a preparation method therefor and use thereof. The modified polyglycolic acid has characteristics of a high weight-average molecular weight, a high melt viscosity and a low melt flow rate, and meanwhile, it also has high tensile strength, and greatly improved heat stability.
In order to achieve the above objective, in a first aspect of the present invention, a modified polyglycolic acid is provided, wherein the modified polyglycolic acid comprises a structural unit A derived from polyglycolic acid and a structural unit B derived from polyisocyanate compound; and
a molar ratio of the structural unit A to the structural unit B is greater than 400 : 1.
In a second aspect of the present invention, a method for preparing a modified polyglycolic acid is provided, wherein the method comprises the following steps of: drying and mixing polyglycolic acid and polyisocyanate compound, then melt blending, extruding and granulating polyglycolic acid and polyisocyanate compound by an extruder to obtain the modified polyglycolic acid;
wherein, a weight-average molecular weight of the polyglycolic acid is 50,000 to 300,000.
In a third aspect of the present invention, a modified polyglycolic acid prepared by the method above is provided.
In a fourth aspect of the present invention, use of the above modified polyglycolic acid in a degradable material or a barrier packaging material is provided.
In a fifth aspect of the present invention, use of the above modified polyglycolic acid in preparing at least one of a film, a fiber and a plate is provided.
Through the above technical solution, the modified polyglycolic acid, the preparation method therefor and the use thereof provided by the present invention obtain the following beneficial effects.
In the present invention, by selecting polyisocyanate compound to modify polyglycolic acid, a reactive group reacts with an end group of the polyglycolic acid during extrusion, and polyglycolic acid chains are connected with each other, so that a weight-average molecular weight and a melt viscosity of the polyglycolic acid are increased, a heat stability of the polyglycolic acid can be significantly improved, and heat degradation of the polyglycolic acid during melting and extrusion is reduced.

Further, in the present invention, the polyisocyanate compound can significantly reduce a melt flow rate of the polyglycolic acid.

DESCRIPTION OF THE DRAWINGS

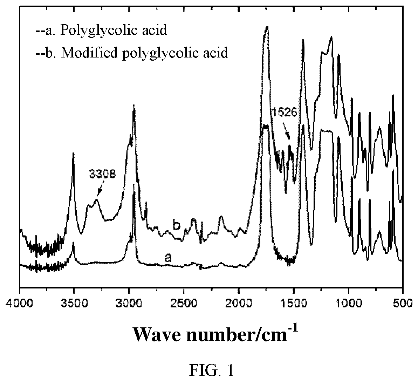

FIG. 1 shows comparison between infrared spectra of a modified polyglycolic acid according to Example 1 and polyglycolic acid.

EMBODIMENT

Endpoints of ranges and any values disclosed herein are not limited to the accurate ranges or values, and these ranges or values should be understood as comprising values close to these ranges or values. For numerical ranges, endpoint values of the ranges, the endpoint values of the ranges and individual point values, and the individual point values may be combined with each other to obtain one or more new numerical ranges, and these numerical ranges should be regarded as being specifically disclosed herein.

In a first aspect of the present invention, a modified polyglycolic acid is provided, wherein the modified polyglycolic acid comprises a structural unit A derived from polyglycolic acid and a structural unit B derived from polyisocyanate compound.

A molar ratio of the structural unit A to the structural unit B is greater than 400 : 1.

In the present invention, the above range is satisfied by controlling the molar ratio of the structural unit A derived from polyglycolic acid to the structural unit B derived from polyisocyanate compound, so that the obtained modified polyglycolic acid has advantages of a high weight-average molecular weight, a high melt viscosity and a low melt flow rate, and meanwhile, it also has high tensile strength, and greatly improved heat stability.

Further, in order to further improve the weight-average molecular weight, the melt viscosity, the melt flow rate, the tensile strength, the heat stability and other performances of the modified polyglycolic acid, the molar ratio of the structural unit A to the structural unit B is made to be 400 to 3,000 : 1.

In the present invention, the molar ratio of the structural unit A derived from polyglycolic acid to the structural unit B derived from polyisocyanate compound is calculated with a nitrogen content, and a calculation method is shown in Formula I:

$$\text{n (structural unit A)} : \text{n (structural unit B)} = \frac{1000 - \frac{x}{14n} M1}{M2} : \frac{x}{14n} \qquad \text{Formula I;}$$

wherein, x is nitrogen content (g/kg), n is a number of nitrogen atoms contained in the polyisocyanate compound, M1 is a molecular weight of the polyisocyanate compound (g/mol), and M2 is a weight-average molecular weight of the polyglycolic acid (g/mol).

In the present invention, the content of the nitrogen element in the modified polyglycolic acid is measured by a trace S/N analyzer, and measure conditions are as follows: a furnace temperature of 1,050 °C, a flow rate of argon and oxygen of 100 ml/min; and a maximum integration time of 800 seconds.

According to the present invention, the content of the nitrogen element is 0.016 wt% to 0.12 wt%, relative to a total weight of the modified polyglycolic acid.

In the present invention, by controlling the content of the nitrogen element in the modified polyglycolic acid so that the content of the nitrogen element satisfies the above range, relative to the total weight of the modified polyglycolic acid, the modified polyglycolic acid has advantages of a high weight-average molecular weight, a high melt viscosity and a low melt flow rate, and has a high tensile strength and a good heat stability at the same time. Further, when the content of the nitrogen element is 0.018 wt% to 0.08 wt%, the weight-average molecular weight, the melt viscosity, the melt flow rate, the tensile strength and the heat stability of the modified polyglycolic acid are further improved.

According to the present invention, the weight-average molecular weight of the modified polyglycolic acid is 100,000 to 500,000, and preferably 180,000 to 300,000.

In the present invention, the polyisocyanate compound refers to a compound containing two or more isocyanate groups.

According to the present invention, the polyisocyanate compound is selected from a diisocyanate compound and/or a diisocyanate prepolymer.

According to the present invention, the polyisocyanate compound is at least one selected from toluene-2,4-diisocyanate, hexamethylene diisocyanate, isophorone diisocyanate, diphenylmethane diisocyanate and lysine diisocyanate.

Preferably, the polyisocyanate compound is selected from hexamethylene diisocyanate and/or diphenylmethane diisocyanate; and preferably selected from hexamethylene diisocyanate and phenylmethane diisocyanate.

According to the present invention, a 5 wt% weight-loss temperature of the polyglycolic acid and a 5 wt% weight-loss temperature of the modified polyglycolic acid are T1 and T2 respectively;

wherein, T2-T1 is greater than or equal to 20 °C, and preferably, T2-T1 is 20 °C to 30 °C.

In the present invention, the 5 wt% weight-loss temperature refers to a temperature corresponding to the polyglycolic acid with 5 wt% weight loss, which is measured by TG thermogravimetry.

According to the present invention, melt flow rates at 240 °C under a load of 2.16 kg of the polyglycolic acid and the modified polyglycolic acid are MFR1 and MFR2 respectively;

wherein, MFR2 is less than or equal to 40%×MFR1, and preferably, MFR2 is (10%~30%)×MFR1.

In the present invention, the melt flow rate is measured according to GB/T 3682- 2000 method.

According to the present invention, melt viscosities at 230 °C under a strain of 2% and a frequency of 0.1 rad/s of the polyglycolic acid and the modified polyglycolic acid are η1 and η2 respectively;

wherein, η2 is greater than or equal to 4×η1, and preferably, η2=(5~10)×η1.

In the present invention, the melt viscosity is measured by frequency scanning method using rotational rheometer (at 230 °C under a strain of 2% and a frequency of 0.1 rad/s to 100 rad/s).

In a second aspect of the present invention, a method for preparing a modified polyglycolic acid is provided, wherein the method comprises the following steps of: drying and mixing polyglycolic acid and polyisocyanate compound, then melt blending, extruding and granulating polyglycolic acid and polyisocyanate compound by an extruder to obtain the modified polyglycolic acid; wherein, a weight-average molecular weight of the polyglycolic acid is 50,000 to 300,000.

In the present invention, the extruder may be a conventional extrusion device in the prior art, such as a single-screw extruder or a twin-screw extruder, and preferably the twin-screw extruder.

According to the present invention, the polyisocyanate compound is used in an amount of 0.5 to 5 parts by weight based on 100 parts by weight of the polyglycolic acid.

According to the present invention, the polyisocyanate compound is used in an amount of 1 to 3 parts by weight based on 100 parts by weight of the polyglycolic acid.

According to the present invention, a weight-average molecular weight of the polyglycolic acid is preferably 100,000 to 150,000.

According to the present invention, the polyisocyanate compound is selected from a diisocyanate compound and/or a diisocyanate prepolymer.

According to the present invention, the polyisocyanate compound is at least one selected from toluene-2,4-diisocyanate, hexamethylene diisocyanate, isophorone diisocyanate, diphenylmethane diisocyanate and lysine diisocyanate.

According to the present invention, the polyisocyanate compound comprises diphenylmethane diisocyanate and at least one polyisocyanate compound selected from toluene-2,4-diisocyanate, hexamethylene diisocyanate, isophorone diisocyanate and lysine diisocyanate.

According to the present invention, the polyisocyanate compound is hexamethylene diisocyanate and/or phenylmethane diisocyanate.

According to the present invention, the polyisocyanate compound is hexamethylene diisocyanate and diphenylmethane diisocyanate.

In the present invention, the inventors found that a molecular weight and a melt viscosity of polyglycolic acid could be increased and a melt flow rate of polyglycolic acid could be lowered when a mixture of hexamethylene diisocyanate and diphenylmethane diisocyanate are used as the polyisocyanate compound to modify polyglycolic acid.

Further, a weight ratio of hexamethylene diisocyanate to diphenylmethane diisocyanate is 0 : 10 to 6 : 4, and preferably 3 : 7 to 5 : 5. The prepared modified polyglycolic acid has characteristics of a high molecular weight, a high melt viscosity and a low melt flow rate.

According to the present invention, the drying is carried out at a drying temperature of 50 °C to 80 °C for a drying time of 5 hours to 10 hours.

In the present invention, the inventors found that when the polyglycolic acid is dried under the above conditions, hydrolysis of the polyglycolic acid during extrusion caused by moisture in raw materials could be avoided. Further, the drying conditions comprise: the drying temperature of 60 °C to 80 °C; and the drying time of 5 hours to 8 hours.

According to the present invention, the melt blending is carried out at a temperature of 220 °C to 250 °C; and under a rotation speed of the extruder of 60 r/min to 110 r/min.

In the present invention, the inventors studied the melt blending conditions, and found that when polyglycolic acid and polyisocyanate compound are melt blended under the above conditions, full reaction of polyisocyanate compound with polyglycolic acid could be ensured, and meanwhile, hydrolysis of polyglycolic acid during extrusion could be avoided, thus avoiding performance deterioration of the prepared modified polyglycolic acid.

Further, the melt blending is carried out at a temperature of 230 °C to 240 °C; and under a rotation speed of the extruder of 80 r/min to 100 r/min.

In a third aspect of the present invention, a modified polyglycolic acid prepared by the above method is provided.

In the present invention, a weight-average molecular weight of the modified polyglycolic acid is 100,000 to 500,000, and preferably 180,000 to 300,000.

In the present invention, a 5 wt% weight-loss temperature of the polyglycolic acid and a 5 wt% weight-loss temperature of the modified polyglycolic acid are T1 and T2 respectively;

wherein, T2-T1 is greater than or equal to 20 °C, and preferably, T2-T1 is 20 °C to 30 °C.

In the present invention, melt flow rates at 240 °C under a load of 2.16 kg of the polyglycolic acid and the modified polyglycolic acid are MFR1 and MFR2 respectively;

wherein, MFR2 is less than or equal to 40%×MFR1, and preferably, MFR2 is (10-30%)×MFR1.

In the present invention, melt viscosities at 230 °C under a strain of 2% and a frequency of 0.1 rad/s of the polyglycolic acid and the modified polyglycolic acid are η1 and η2;

wherein, η2 is greater than or equal to 4×η1, and preferably, η2=(5-10)×η1.

In a fourth aspect of the present invention, use of the above modified polyglycolic acid in a degradable material or a barrier packaging material is provided.

In a fifth aspect of the present invention, use of the above modified polyglycolic acid in preparing at least one of a film, a fiber and a plate is provided.

The present invention will be described in detail hereinafter with reference to the Examples. In the following Examples,

the melt flow rate of polyglycolic acid is measured by the GB/T 3682- 2000 method;
the 5 wt% weight-loss temperature of polyglycolic acid is measured by the TG thermogravimetry; and
the melt viscosity of polyglycolic acid is measured by frequency scanning method using rotational rheometer (at 230 °C under the strain of 2% and the frequency of 0.1 rad/s to 100 rad/s).

In the modified polyglycolic acid, the nitrogen content is measured by a trace S/N analyzer, and the modified polyglycolic acid is soaked and cleaned by acetone solvent to remove the residual polyisocyanate compound before the test. Measure conditions are: a furnace temperature of 1,050 °C, a flow rate of argon and oxygen of 100 ml/min; and a maximum integration time of 800 seconds.

In the modified polyglycolic acid, the molar ratio of the structural unit A derived from polyglycolic acid to the structural unit B derived from polyisocyanate compound is calculated with the nitrogen content, and a calculation method is shown in Formula I:

$$\text{n (structural unit A)} : \text{n (structural unit B)} = \frac{1000 - \dfrac{x}{14n} M1}{M2} : \frac{x}{14n} \qquad \text{Formula I;}$$

wherein, x is nitrogen content (g/kg), n is a number of nitrogen atoms contained in polyisocyanate compound, M1 is a molecular weight of polyisocyanate (g/mol), and M2 is a weight-average molecular weight of polyglycolic acid (g/mol).

A tensile strength of polyglycolic acid is measured by the GB/T1040.2-2006 method.

Polyglycolic acid A (PGA) is commercially available and has a weight-average molecular weight of 140,000; polyglycolic acid B (PGA) is commercially available and has a weight-average molecular weight of 90,000; and polyglycolic acid C (PGA) is commercially available and has a weight-average molecular weight of 40,000.

Other raw materials used in Examples and the Comparative Examples are all commercially available.

Example 1

Polyglycolic acid A was dried at 70 °C for 8 hours for later use; and 100 parts by weight of dried polyglycolic acid and 3 parts by weight of polyisocyanate compound (hexamethylene diisocyanate HDI : diphenylmethane diisocyanate MDI = 2 : 8) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 2

Polyglycolic acid A was dried at 70 °C for 8 hours for later use; and 100 parts by weight of dried polyglycolic acid and 2 parts by weight of polyisocyanate compound (hexamethylene diisocyanate HDI : diphenylmethane diisocyanate MDI = 4 : 6) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 3

A preparation method was as follows: polyglycolic acid A was dried at 70 °C for 8 hours for later use; and 100 parts by weight of dried polyglycolic acid and 3 parts by weight of polyisocyanate compound (hexamethylene diisocyanate HDI : diphenylmethane diisocyanate MDI = 5 : 5) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 4

Polyglycolic acid A was dried at 70 °C for 8 hours for later use; and 100 parts by weight of dried polyglycolic acid and 4 parts by weight of polyisocyanate compound (hexamethylene diisocyanate HDI : diphenylmethane diisocyanate MDI = 5 : 5) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 5

Polyglycolic acid A was dried at 70 °C for 8 hours for later use; and 100 parts by weight of dried polyglycolic acid and 3 parts by weight of polyisocyanate compound (diphenylmethane diisocyanate MDI) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 6

Polyglycolic acid A was dried at 70 °C for 8 hours for later use; and 100 parts by weight of dried polyglycolic acid and 0.5 parts by weight of polyisocyanate compound (hexamethylene diisocyanate HDI : diphenylmethane diisocyanate MDI = 2 : 8) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 7

Polyglycolic acid A was dried at 70 °C for 8 hours for later use; and 100 parts by weight of dried polyglycolic acid and 5 parts by weight of polyisocyanate compound (hexamethylene diisocyanate HDI : diphenylmethane diisocyanate MDI = 5 : 5) were evenly mixed, then melt blended at 240 °C by a twin-screw extruder with a rotation speed of 100 r/min, and extruded and granulated to obtain a modified polyglycolic acid. Amount of polyglycolic acid A and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 8

A preparation method was the same as that of Example 1, except that a melting and extrusion temperature was 230 °C.
In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 9

A preparation method was the same as that of Example 1, except that polyglycolic acid raw material used was different, and a weight-average molecular weight of the polyglycolic acid B used was 90,000. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Example 10

A preparation method was the same as that of Example 1, except that the amount of polyisocyanate compound was different. Amount of polyglycolic acid and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Comparative Example 1

100 parts by weight of polyglycolic acid A were dried at 70 °C for 8 hours for later use; and the dried polyglycolic acid was melt blended at 240 °C by a twin-screw extruder with a rotation speed of 100 r/min, and extruded and granulated. Preparation conditions were shown in Table 1, and a weight-average molecular weight, a tensile strength, a melt viscosity $\eta 1$, a 5 wt% weight-loss temperature T1 and a melt flow rate MFR1 of the polyglycolic acid were shown in Table 2.

Comparative Example 2

A preparation method was the same as that of Comparative Example 1, except that polyglycolic acid raw material used was different, and a weight-average molecular weight of the polyglycolic acid B used was 90,000. Amount of polyglycolic acid and polyisocyanate compound and preparation conditions were shown in Table 1, and a weight-average molecular weight, a tensile strength, a melt viscosity $\eta 1^*$, a 5 wt% weight-loss temperature T1* and a melt flow rate MFR1* of the polyglycolic acid were shown in Table 2.

Comparative Example 3

A preparation method was the same as that of Comparative Example 1, except that polyglycolic acid raw material used was different, and a weight-average molecular weight of the polyglycolic acid C used was 40,000. Amount of polyglycolic acid and polyisocyanate compound and preparation conditions were shown in Table 1, and a weight-average molecular weight, a tensile strength, a melt viscosity $\eta 1^{\#}$, a 5 wt% weight-loss temperature $T1^{\#}$ and a melt flow rate $MFR1^{\#}$ of the polyglycolic acid were shown in Table 2.

Comparative Example 4

A preparation method was the same as that of Example 1, except that polyglycolic acid raw material used was different, and a weight-average molecular weight of the polyglycolic acid C used was 40,000. Amount of polyglycolic acid and polyisocyanate compound and preparation conditions were shown in Table 1. In the modified polyglycolic acid, a molar ratio of a structural unit A derived from polyglycolic acid to a structural unit B derived from polyisocyanate compound, a content of a nitrogen element in the modified polyglycolic acid, a weight-average molecular weight of the modified polyglycolic acid, a melt viscosity, a tensile strength, a 5 wt% weight-loss temperature and a melt flow rate were shown in Table 2.

Table 1 (parts by weight)

| Serial number | Polyglycolic acid | Polyisocyanate | HDI : MDI | Drying | Melt extrusion |
|---|---|---|---|---|---|
| Example 1 | A/100 | 3 | 2 : 8 | 70°C/8 h | 240°C |
| Example 2 | A/100 | 2 | 4 : 6 | 70°C/8 h | 240°C |
| Example 3 | A/100 | 3 | 5 : 5 | 70°C/8 h | 240°C |
| Example 4 | A/100 | 4 | 5 : 5 | 70°C/8 h | 240°C |
| Example 5 | A/100 | 3 | 0 : 10 | 70°C/8 h | 240°C |
| Example 6 | A/100 | 0.5 | 2 : 8 | 70°C/8 h | 240 |
| Example 7 | A/100 | 5 | 5 : 5 | 70°C/8 h | 240 |
| Example 8 | A/100 | 3 | 2 : 8 | 70°C/8 h | 230 |
| Example 9 | B/100 | 3 | 2 : 8 | 70°C/8 h | 240 |
| Comparative Example 1 | A/100 | 0 | - | 70°C/8 h | 240°C |
| Comparative Example 2 | B/100 | 0 | - | 70°C/8 h | 240°C |
| Comparative Example 3 | C/100 | 0 | - | 70°C/8 h | 240°C |
| Comparative Example 4 | C/100 | 3 | 2 : 8 | 70°C/8 h | 240°C |
| Example 10 | A/100 | 8 | 2 : 8 | 70°C/8 h | 240°C |

Table 2

| Serial number | n (C$_2$H$_2$O$_2$) : n(NHC=O) | Nitrogen element, wt% | Weight-average molecular weight, ten thousand | $\eta 2/\eta 1$ | Tensile strength, MPa | MFR2/MFR1 | T2-T1, °C |
|---|---|---|---|---|---|---|---|
| Example 1 | 856 | 0.057 | 15.5 | 4.9 | 108 | 34% | 24 |
| Example 2 | 530 | 0.090 | 14.9 | 4.2 | 109 | 37.5% | 22 |
| Example 3 | 596 | 0.080 | 16.2 | 5.9 | 110 | 29.5% | 25 |
| Example 4 | 1200 | 0.040 | 18. | 6.3 | 114 | 27.2% | 27 |
| Example 5 | 480 | 0.100 | 14.2 | 5.3 | 111 | 38.6% | 23 |
| Example 6 | 1000 | 0.048 | 12.7 | 4.0 | 105 | 39.4% | 20 |
| Example 7 | 800 | 0.060 | 16.4 | 5.7 | 107 | 32% | 29 |
| Example 8 | 856 | 0.057 | 15.6 | 5.0 | 108 | 33% | 24 |
| Example 9 | 503 | 0.095 | 13.3 | 4.0 | 101 | 38% | 23 |
| Example 10 | 761 | 0.063 | 13 | 4.0 | 105 | 40% | 24 |

(continued)

| Serial number | n (C$_2$H$_2$O$_2$) : n(NHC=O) | Nitrogen element, wt% | Weight-average molecular weight, ten thousand | η2/η1 | Tensile strength, MPa | MFR2/MFR1 | T2-T1, °C |
|---|---|---|---|---|---|---|---|
| Comparative Example 1 | - | 0 | 11.5 | η1 | 104 | MFR1 | T1 |
| Comparative Example 2 | - | 0 | 7.9 | η1* | 100 | MFR1* | T1* |
| Comparative Example 3 | - | 0 | 3.2 | η1# | 60 | MFR1# | T1# |
| Comparative Example 4 | 225 | 0.21 | 7.0 | 2.3 | 65 | 57% | 23 |

It could be seen from the infrared spectrum of Example 1 shown in FIG. 1 that vibration absorption peaks of the modified polyglycolic acid appeared at 3308 cm$^{-1}$ and 1526 cm$^{-1}$, which were caused by vibration of an amide group, indicating that the polyisocyanate compound had chemically reacted with the polyglycolic acid.

As seen from results in Table 2, after PGA was chemically modified by adding polyisocyanate compound in the present invention, the weight-average molecular weight of the modified polyglycolic acid was increased to a certain extent, the MFR was reduced to 40% or less of polyglycolic acid, a complex viscosity measured by rotational rheometer at 230 °C under a frequency of 0.1 rad/s was increased to more than 4 times that of polyglycolic acid, and the tensile strength remained above 100 MPa when compared with polyglycolic acid.

Those described above are preferred embodiments of the present invention, but are not intended to limit the present invention. Within the scope of the technical concept of the present invention, many simple modifications can be made to the technical solutions of the present invention, comprising the combination of various technical features in any other suitable way. These simple modifications and combinations shall also be regarded as the contents disclosed by the present invention and fall within the protection scope of the present invention.

## Claims

1. A modified polyglycolic acid, wherein the modified polyglycolic acid comprises a structural unit A derived from polyglycolic acid and a structural unit B derived from polyisocyanate compound; and
a molar ratio of the structural unit A to the structural unit B is greater than 400 : 1.

2. The modified polyglycolic acid according to claim 1, wherein the molar ratio of the structural unit A to the structural unit B is 400 to 3,000 : 1.

3. The modified polyglycolic acid according to claim 1 or 2, wherein a content of a nitrogen element is 0.016 wt% to 0.12 wt%, and preferably 0.018 wt% to 0.08 wt%, relative to a total weight of the modified polyglycolic acid.

4. The modified polyglycolic acid according to any one of claims 1 to 3, wherein a weight-average molecular weight of the modified polyglycolic acid is 100,000 to 500,000, and preferably 180,000 to 300,000;

   preferably, the polyisocyanate compound is selected from a diisocyanate compound and/or a diisocyanate prepolymer;
   preferably, the polyisocyanate compound is at least one selected from toluene-2,4-diisocyanate, hexamethylene diisocyanate, isophorone diisocyanate, diphenylmethane diisocyanate and lysine diisocyanate; and
   more preferably, the polyisocyanate compound is selected from hexamethylene diisocyanate and/or diphenylmethane diisocyanate; and preferably selected from hexamethylene diisocyanate and phenylmethane diisocyanate.

5. The modified polyglycolic acid according to any one of claims 1 to 4, wherein a 5 wt% weight-loss temperature of the polyglycolic acid and a 5 wt% weight-loss temperature of the modified polyglycolic acid are T1 and T2 respectively;

   wherein, T2-T1 is greater than or equal to 20 °C, and preferably, T2-T1 is 20 °C to 30 °C;

preferably, melt flow rates at 240°C under a load of 2.16 kg of the polyglycolic acid and the modified polyglycolic acid are MFR1 and MFR2 respectively;

wherein, MFR2 is less than or equal to 40%×MFR1, and preferably, MFR2 is (10%~30%)×MFR1; and

preferably, melt viscosities at 230 °C under a strain of 2% and a frequency of 0.1 rad/s of the polyglycolic acid and the modified polyglycolic acid are η1 and η2 respectively;

wherein, η2 is greater than or equal to 4×η1, and preferably, η2=(5~10)×η1.

6. A method for preparing a modified polyglycolic acid, wherein the method comprises steps of: drying and mixing polyglycolic acid and polyisocyanate compound, then melt blending, extruding and granulating the polyglycolic acid and the polyisocyanate compound by an extruder to obtain the modified polyglycolic acid;

wherein, a weight-average molecular weight of the polyglycolic acid is 50,000 to 300,000.

7. The method according to claim 6, wherein the polyisocyanate compound is used in an amount of 0.5 to 5 parts by weight based on 100 parts by weight of the polyglycolic acid; and

preferably, the polyisocyanate compound is used in an amount of 1 to 3 parts by weight based on 100 parts by weight of the polyglycolic acid.

8. The method according to claim 6 or 7, wherein the polyglycolic acid has a weight-average molecular weight of 100,000 to 150,000;

preferably, the polyisocyanate compound is selected from a diisocyanate compound and/or a diisocyanate prepolymer;

preferably, the polyisocyanate compound is at least one selected from toluene-2,4-diisocyanate, hexamethylene diisocyanate, isophorone diisocyanate, diphenylmethane diisocyanate and lysine diisocyanate; and

more preferably, the polyisocyanate compound comprises diphenylmethane diisocyanate and at least one polyisocyanate compound selected from toluene-2,4-diisocyanate, hexamethylene diisocyanate, isophorone diisocyanate and lysine diisocyanate.

9. The method according to any one of claims 6 to 8, wherein the polyisocyanate compound is hexamethylene diisocyanate and/or phenylmethane diisocyanate;

preferably, the polyisocyanate compound is hexamethylene diisocyanate and diphenylmethane diisocyanate; and

more preferably, a weight ratio of hexamethylene diisocyanate to diphenylmethane diisocyanate is 0 : 1 to 6 : 4, and preferably 3 : 7 to 5 : 5.

10. The method according to any one of claims 6 to 9, wherein the drying is carried out at a drying temperature of 50°C to 80°C, preferably 60°C to 80°C; for a drying time of 5 hours to 10 hours, preferably 5 hours to 8 hours.

11. The method according to any one of claims 6 to 10, wherein the melt blending is carried out at a temperature of 220 °C to 250°C, preferably 230°C to 240°C; under a rotation speed of the extruder of 60 r/min to110 r/min, preferably 80 r/min to 100 r/min.

12. A modified polyglycolic acid prepared by the method according to any one of claims 6 to 11.

13. Use of the modified polyglycolic acid according to any one of claims 1 to 5 and claim 12 in a degradable material or a barrier packaging material.

14. Use of the modified polyglycolic acid according to any one of claims 1 to 5 and claim 12 in preparing at least one of a film, a fiber and a plate.

FIG. 1

## INTERNATIONAL SEARCH REPORT

| International application No. |
|---|
| **PCT/CN2021/105985** |

**A.    CLASSIFICATION OF SUBJECT MATTER**

C08G 63/91(2006.01)i;  C08J 7/12(2006.01)i;  C08J 7/00(2006.01)i;  C08L 67/04(2006.01)i

According to International Patent Classification (IPC) or to both national classification and IPC

**B.    FIELDS SEARCHED**

Minimum documentation searched (classification system followed by classification symbols)

C08G63 C08J7 C08L67

Documentation searched other than minimum documentation to the extent that such documents are included in the fields searched

Electronic data base consulted during the international search (name of data base and, where practicable, search terms used)

CNPAT, WPI, EPODOC, CNKI, ISI, CA, WILEY, ACS, 聚乙醇酸, 二异氰酸酯, 熔融, 挤出, 可降解, 生物, 材料, polyglycolic w acid, polyglycolide, polyoxyacetyl, diisocyanate, fus+, extrude+, degradable, biomaterial, biological

**C.    DOCUMENTS CONSIDERED TO BE RELEVANT**

| Category* | Citation of document, with indication, where appropriate, of the relevant passages | Relevant to claim No. |
|---|---|---|
| X | CN 109535470 A (ZHU, Zhirong et al.) 29 March 2019 (2019-03-29)<br>claims 1-7, description paragraphs 6-10, 13 | 1-14 |
| X | CN 111454552 A (BAOTOU RESCARCH INSTITUTE OF RARE EARTH) 28 July 2020 (2020-07-28)<br>claims 1-10, description paragraphs 5, 7-12, 19, 31-38, embodiment | 1-14 |
| A | CN 111108138 A (3M INNOVATIVE PROPERTIES CO.) 05 May 2020 (2020-05-05)<br>claims 1-20, description the whole document | 1-14 |
| A | CN 110041502 A (NINGBO INSTITUTE OF MATERIALS TECHNOLOGY AND ENGINEERING, CHINESE ACADEMY OF SCIENCES) 23 July 2019 (2019-07-23)<br>claims 1-10, and entire description | 1-14 |
| A | JP 2011-52110 A (MITSUI CHEMICALS INC.) 17 March 2011 (2011-03-17)<br>claims 1-10, and entire description | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 August 2021** | **26 August 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/105985**

| Patent document cited in search report | | | Publication date (day/month/year) | Patent family member(s) | | | Publication date (day/month/year) |
|---|---|---|---|---|---|---|---|
| CN | 109535470 | A | 29 March 2019 | CN | 109535470 | B | 13 April 2021 |
| CN | 111454552 | A | 28 July 2020 | None | | | |
| CN | 111108138 | A | 05 May 2020 | WO | 2019060284 | A1 | 28 March 2019 |
| | | | | US | 2020277517 | A1 | 03 September 2020 |
| | | | | EP | 3684832 | A1 | 29 July 2020 |
| CN | 110041502 | A | 23 July 2019 | CN | 110041502 | B | 26 January 2021 |
| JP | 2011-52110 | A | 17 March 2011 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010837348
- CN 106432697 A